# NEUE EUROPÄISCHE PATENTSCHRIFT

(11) **EP 3 118 153 B2**
(45) Veröffentlichungstag und Bekanntmachung des Hinweises auf die Entscheidung über den Einspruch: **25.09.2024**
(45) Hinweis auf die Patenterteilung: 11.04.2018
(21) Anmeldenummer: 16177593.7
(22) Anmeldetag: 01.07.2016
(51) Int. Cl.: B66F 17/00, B66F 9/06, B66F 9/075

(54) **VERFAHREN ZUR HINDERNISERFASSUNG BEI EINEM FLURFÖRDERZEUG**
METHOD FOR DETECTING AN OBSTRUCTION FOR AN INDUSTRIAL TRUCK
PROCÉDÉ DESTINÉ À LA MESURE D'OBSTACLES DANS UN CHARIOT DE MANUTENTION

(30) Priorität: 17.07.2015 DE 102015111613
(43) Veröffentlichungstag der Anmeldung: 18.01.2017
(73) Patentinhaber: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Fischer, Christian, 24598 Boostedt (DE)
(74) Vertreter: Patentship Patentanwaltgesellschaft

(56) Entgegenhaltungen:
- WO-A1-2013/102212
- US-A1- 2014 277 691
- US-A1- 2015 120 125

## Beschreibung

Die Erfindung betrifft ein Verfahren zur Hinderniserfassung bei einem Flurförderzeug. Insbesondere betrifft die Erfindung ein Verfahren zur Erfassung von Hindernissen in der Umgebung eines Flurförderzeugs, vor allem eines für das Kommissionieren vorgesehenen Flurförderzeugs, wobei das Flurförderzeug zur Überwachung der Umgebung einen Sensor aufweist, der mit einer Steuerungsvorrichtung verbunden ist, und durch Auswertung der Daten des Sensors einen Überwachungsbereich erfasst. Ein solches Verfahren zur Erfassung von Hindernissen ist bekannt aus US 2015 0120 125A. Unter den vielfältigen Einsatzmöglichkeiten für Flurförderzeugen ist auch das Zusammenstellen von Waren für eine Lieferung an einen Kunden, das Kommissionieren. Dabei werden in Lagerhäusern spezielle Flurförderzeuge eingesetzt, mit denen durch den Lagerbereich, beispielsweise durch Regalreihen gefahren wird. Solche Kommissionierflurförderzeuge können dabei so ausgelegt sein, dass eine Person während des Kommissionierens mitfährt, aber auch beim Zusammenstellen der Waren und beim Fahren an einem Regal entlang zu Fuß neben dem Flurförderzeug mitläuft, um Waren aus dem Regal zu entnehmen und diese auf eine Palette oder in einen Transportbehälter auf dem Flurförderzeug abzulegen.

Für die erleichterte Bedienung des Kommissionierflurförderzeugs sind dabei Fernbedienungen bekannt. Durch solche Fernbedienungen hat die kommissionierende Person, der Kommissionierer oder Bediener, die Möglichkeit, das Kommissionierflurförderzeug zu verlassen und dessen Fahrbewegungen mit der Fernbedienung anzusteuern. Eine bekannte Variante hierfür ist, dass der Kommissionierer durch einen Knopfdruck ein Vorwärtsfahren des Fahrzeugs anfordert, wobei das Kommissionierflurförderzeug so lange fährt, wie der Knopf gedrückt bleibt.

Bekannt sind dabei Steuerungen zur automatischen Führung des Kommissionierflurförderzeugs, die auf in einem Regalgang sich befindende Hindernisse reagiert, indem das Flurförderzeug ausweicht. Verwendet werden für diese automatischen Fahrbewegungen häufig optische Sensoren, beispielsweise ein Laserscanner, mit dem Hindernisse bzw. Objekte im Regalgang erkannt werden können.

Nachteilig an diesem Stand der Technik ist, dass das Ausweichen unabhängig davon erfolgt, ob und wie schnell sich ein Objekt als Hindernis bewegt. Daher kommt es dazu, dass das Flurförderzeug vor Hindernissen in der Bewegungsrichtung des Fahrzeuges stets bereits frühzeitig ausweicht, unabhängig davon, ob es sich dabei um statische oder sich bewegende Hindernisse handelt, mit der Folge ungewollter seitliche Ausweichbewegungen des Flurförderzeugs und von Zeitverlusten. Insbesondere führt dies dazu, dass auch ein Kommissionierer, der sich außerhalb des Flurförderzeugs befindet und den Erfassungsbereich des Sensors durchquert, bereits eine Ausweichbewegung verursachen kann. Es ist gerade beim Kommissionieren jedoch sehr häufig, dass der Kommissionierer einen solchen Bereich außerhalb einer engeren Kollisionssicherheitszone, jedoch innerhalb des Erfassungsbereichs des Sensors rasch durchquert, um möglichst effiziente und mit kurzen Laufwegen Waren zu erreichen.

Weiterhin ist es auch wünschenswert, die Umgebung möglichst lückenlos zu erfassen im Bereich vor und um das Flurförderzeug. Nach dem bekannten Stand der Technik kann jedoch nur in der Hauptfahrrichtung, soweit der optische Sensor sehen kann, die Umgebung erfasst werden und es stehen keine Informationen für den durch Hindernisse oder Gegenstände verdeckten Bereich zur Verfügung.

Der vorliegenden Erfindung liegt daher die Aufgabe zugrunde, ein Verfahren zur Erfassung von Hindernissen bei einem Flurförderzeug, insbesondere bei einem Flurförderzeug zur Kommissionierung, zur Verfügung zu stellen, dass die zuvor genannten Nachteile vermeidet und mit dem nicht unbedingt erforderliche Ausweichbewegungen vor Hindernissen im automatischen Betrieb vermieden werden.

Diese Aufgabe wird durch ein Verfahren mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Verfahren zur Erfassung von Hindernissen in der Umgebung eines Flurförderzeugs, insbesondere eines für das Kommissionieren vorgesehenen Flurförderzeugs, wobei das Flurförderzeug zur Überwachung der Umgebung einen Sensor aufweist, der mit einer Steuerungsvorrichtung verbunden ist, und durch Auswertung der Daten des Sensors einen Überwachungsbereich erfasst, in den Daten in der Umgebung des Flurförderzeug erfasste Objekte in eine Karte eingetragen werden sowie kontinuierlich der Überwachungsbereich erneut erfasst wird, wobei bei Objekten an derselben absoluten Position in der Karte eine Gewichtung erhöht wird und bei an derselben Position fehlenden Objekten die Gewichtung eines eingetragenen Objekts verringert wird bis hin zu einer Löschung des Objekts.

Durch den Sensor, bei dem es sich um jegliche Art von für die Erfassung von Objekten in der Umgebung geeigneten Sensor handeln kann, bevorzugt einen optischen Sensor, werden Bildpunkte bzw. Daten erfasst und mit bekannten Methoden der Auswertung, insbesondere der Bildverarbeitung, als Hindernisse bzw. Objekte erkannt. Diese werden in eine Karte eingetragen. Die Erfassung der Daten durch den Sensor erfolgt sich kontinuierlich wiederholend, beispielsweise bei einem Laserscanner mit jedem Umlauf des Laserstrahls. Es ergibt sich somit eine Abfolge von Datensätzen, wobei in der Karte ein Objekt, das erneut an derselben Stelle sich befindet, höher gewichtet wird, und ein Objekt das an dieser Stelle nicht mehr vorhanden ist, in der Gewichtung herabgesetzt wird. Dies kann erfolgen, indem von einem herabgesetzt wird. Dies kann erfolgen, indem von einem ersten Eintragswert bis zu einem Maximalwert in einer bestimmten Anzahl von Schritten die Gewichtung jeweils erhöht wird. Dadurch wird beispielsweise eine sich schnell bewegende Person in einem ersten Schritt in der Karte an einer Stelle als Objekt mit dem kleinsten Wert eingetragen und de sie beim folgenden Datensatz bereits nicht mehr an dieser Stelle ist, wird dieses Objekt in einem zweiten Schritt gleich wieder ausgetragen, da um denselben Wert wieder heruntergewichtet. In der Folge wird es möglich, zwischen relevanten, statischen Objekten als Hindernissen und auf der anderen Seite nicht relevanten, dynamischen Hindernissen zu unterscheiden. Dies kann beispielsweise anhand eines Schwellenwerts für die Gewichtung erfolgen oder auch, wenn als statische Objekte nur solche Objekte angesehen werden, die eine maximale Gewichtung erreicht haben. Es ergibt sich kein ungewolltes Ausweichen bei durch einen Überwachungsbereich laufenden Personen sowie vorbelfahrenden anderen Fahrzeugen, wenn nur die relevanten Objekte als Hindernisse betrachtet werden.

Vorteilhaft ist die Karte eine Gitternetzkarte.

In eine solche Gitternetzkarte, auch bezeichnet Gridmap, werden Objekte mit einem Wert in die Gitterfelder eingetragen.

In einer günstigen Ausgestaltung des Verfahrens ist die Karte eine ortsfeste, globale Karte.

Diese Karte ist beispielsweise ortsfest gegenüber einem Lager oder einem Teilbereich eines Lagers, in dem sich das Flurförderzeug bewegt.

Die Karte kann eine relativ auf das Flurförderzeug bezogene Karte sein.

Die Karte bewegt sich hier mit dem Flurförderzeug mit, wobei die relative Ortsveränderung der Einträge in der Karte aufgrund der Fahrbewegungen des Flurförderzeugs korrigiert und mitgerechnet werden kann.

Es werden durch einen virtuellen Sensor, der in der Karte positioniert ist, Sensordaten über Hindernisse in der Umgebung des Flurförderzeugs aus der Karte erfasst und an eine Fahrzeugsteuerung geleitet.

Dieser virtuelle Sensor, der beispielsweise von einem Steuerungscomputer umgesetzt werden kann, kann eine frei wähibare Modellierung aufweisen in Bezug auf einen Öffnungswinkel, eine Auflösung sowie eine Reichweite virtuell auszusendender Abtaststrahlen. Der virtuelle Sensor wird frei in der Karte positioniert und liefert Sensordaten über Hindernisse. Dabei können auch Hindernisse bzw. Objekte außerhalb des Überwachungsbereichs des tatsächlichen Sensors erfasst werden, da die Reichweite größer gefasst sein kann und insbesondere auch durch Hindernisse verdeckte Objekte erfasst werden können. In den virtuellen Sensordaten sind keine Informationen über dynamische Objekte enthalten bzw werden diese besonders markiert. Wenn die virtuellen Sensordaten daher durch eine Fahrzeugsteuerung für das automatische Fahren des Flurförderzeugs eingesetzt werden, so kommt es nicht zu ungewollten Ausweichbewegungen aufgrund dynamischer Objekte, wie etwa einer durch den Überwachungsbereich laufenden Person.

In einer Ausgestaltung des Verfahrens ist der virtuelle Sensor an der Position des Flurförderzeugs in der Karte angeordnet

Dadurch hat der virtuelle Sensor denselben Blickwinkel wie der tatsächliche Sensor auf dem Flurförderzeug. Dieser kann beispielsweise ausgerichtet sein in Fahrtrichtung nach vorne.

Der Sensor ist ein Laserscanner.

Für die Auswertung der Daten des Sensors können die nach dem Stand der Technik bekannten Methoden der digitalen Bildverarbeitung Bilderkennung eingesetzt wird. Durch das zuvor beschriebene Verfahren wird es auch möglich die Bewegung dynamischer Objekte in der Karte zu Verfolgen.

Weitere Vorteile und Einzelheiten der Erfindung werden anhand des in den schematischen Figuren dargestellten Ausführungsbeispieis näher erläutert. Hierbei zeigt
- Fig. 1: schematisch ein Flurförderzeug mit einem Kommissionierer und weiteren Hindernissen, bei dem das erfindungsgemäße Verfahren durchgeführt wird,
- Fig. 2: schematisch eine Gitternetzkarte zur Erfassung von Objekten in der Umgebung des Flurförderzeugs der Fig. 1 und
- Fig. 3: schematisch eine virtuelle Sensorüberprüfung der Gitternetzkarte.

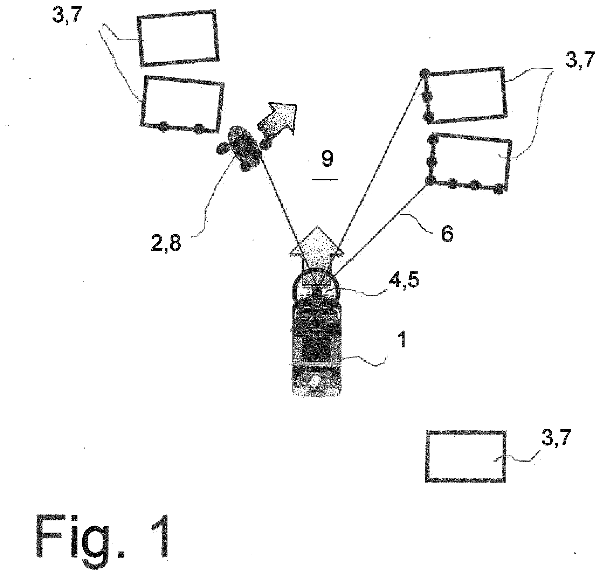

Die Fig. 1 zeigt schematisch ein Flurförderzeug 1, dass sich selbst in Richtung des dargestellten Pfeils bewegt, bei dem das erfindungsgemäße Verfahren durchgeführt wird, mit einer Person als Kommissionierer 2 und weiteren Hindernissen 3, beispielsweise Paletten mit Waren. Ein Sensor 4 in Form eines Laserscanners 5 erfasst durch Laserstrahlen 6 die statischen Hindernisse 3 als statische Objekte 7 und den Kommissionierer 2 als dynamisches Objekt 8, das sich wie durch den Pfeil angedeutet bewegt, in einem Überwachungsraum 9 des Flurförderzeugs 1.

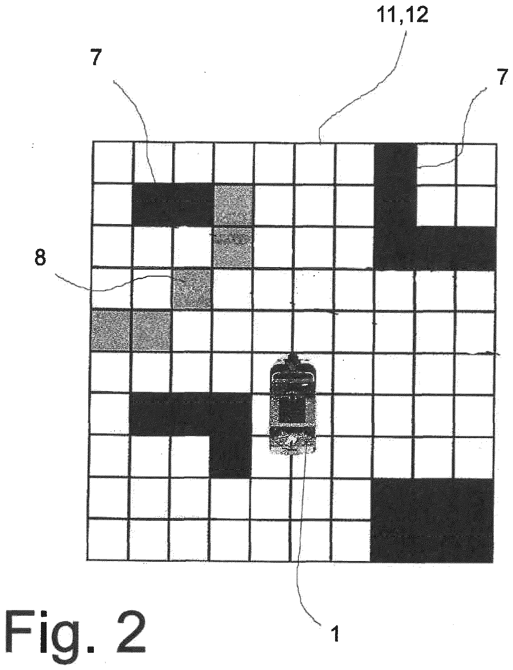

Die Fig. 2 zeigt schematisch eine Karte 10 in Form einer Gitternetzkarte 11 bzw. Gridmap zur Erfassung von Objekten 7,8 in der Umgebung des Flurförderzeugs 1 der Fig. 1. dabei sind die statischen Objekte 7 dunkler eingetragen in der Darstellung, entsprechend einer höheren oder maximalen Gewichtung. Dies kann beispielsweise einem hohen Zahlenwert entsprechen, der einem Feld der Gitternetzkarte zugeordnet wird. Die dynamischen Objekte 8 in der Karte 10 entsprechen den nacheinander eingenommenen Positionen des Kommissionlerers 2 in der Fig. 1 und sind in einem helleren Grautung.

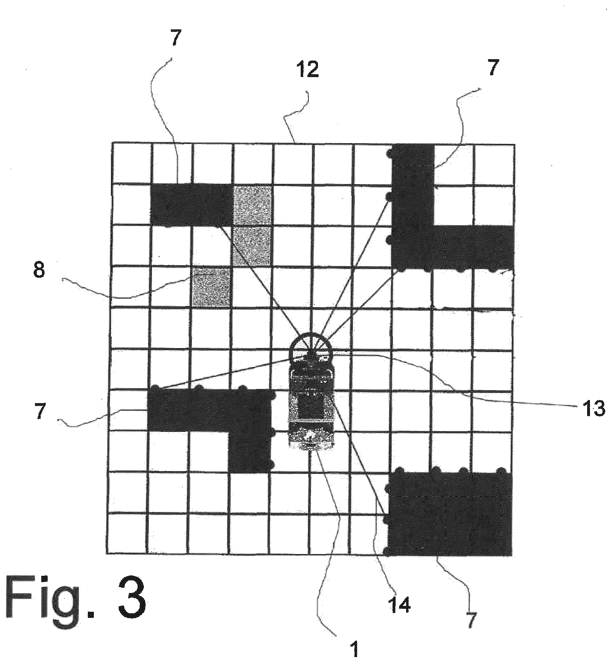

Die Fig. 3 zeigt schematisch eine virtuelle Sensorüberprüfung der Gitternetzkarte 12. Ein virtueller Sensor 13 ist an einer Position des Flurförderzeug 1 in der Gitternetzkarte 12 angeordnet. Mithilfe von virtuellen Abtaststrahlen 14 werden die statischen Objekte 7 erfasst. Das dynamische Objekt 8 wird nicht erfasst und über dieses werden keine Sensordaten beispielsweise an eine Fahrzeugsteuerung weitergegeben. Dies kann dadurch erfolgen, dass nur Objekte 7 mit einer Gewichtung oberhalb eines Schwellenwertes oder mit Maximalgewichtung erfasst werden.

## Patentansprüche

1. Verfahren zur Erfassung von Hindernissen (3) in der Umgebung eines Flurförderzeugs (1), insbesondere eines für das Kommissionieren vorgesehenen Flurförderzeugs(1), wobei das Flurförderzeug (1) zur Überwachung der Umgebung einen Sensor (4) aufweist, der mit einer Steuerungsvorrichtung verbunden ist, und durch Auswertung der Daten des Sensors (4) einen Überwachungsbereich (9) erfasst,
wobei in den Daten in der Umgebung des Flurförderzeug (1) erfasste Objekte (7,8) in eine Karte (10) eingetragen werden sowie kontinuierlich der Überwachungsbereich (6) erneut erfasst wird, **dadurch gekennzeichnet, dass** bei Objekten (7) an derselben absoluten Position in der Karte eine Gewichtung erhöht wird und bei an derselben Position fehlenden Objekten (8) die Gewichtung eines eingetragenen Objekts (8) verringert wird bis hin zu einer Löschung des Objekts (8), wobei der Sensor (4) ein Laserscanner (5) ist, und **dadurch gekennzeichnet, dass** durch einen virtuellen Sensor (13), der in der Karte (10) positioniert ist, Sensordaten über Hindernisse in der Umgebung des Flurförderzeugs (1) aus der Karte (10) erfasst werden und an eine Fahrzeugsteuerung geleitet werden.

2. Verfahren nach Anspruch 1,
**dadurch gekennzeichnet,**
**dass** die Karte (10) eine Gitternetzkarte (12) ist.

3. Verfahren nach Anspruch 1 oder 2,
**dadurch gekennzeichnet,**
**dass** die Karte (10) eine ortsfeste, globale Karte ist.

4. Verfahren nach Anspruch 1 oder 2,
**dadurch gekennzeichnet,**
**dass** die Karte (10) eine relativ auf das Flurförderzeug (1) bezogene Karte ist.

5. Verfahren nach einem der Ansprüche 1 bis 4,
**dadurch gekennzeichnet,**
**dass** der virtuelle Sensor (13) an der Position des Flurförderzeugs (1) in der Karte (10) angeordnet ist.

## Claims

1. Method for detecting obstacles (3) in the environment of an industrial truck (1), in particular an industrial truck (1) provided for order picking, wherein the industrial truck (1) has a sensor (4) for monitoring the environment, which sensor is connected to a control apparatus, and captures a monitoring area (9) by evaluating the data from the sensor (4),
wherein objects (7, 8) detected in the environment of the industrial truck (1) in the data are entered in a map (10) and the monitoring area (6) is continuously captured again, **characterized in that** a weighting is increased in the case of objects (7) at the same absolute position in the map and the weighting of an entered object (8) is reduced in the case of objects (8) missing at the same position until the object (8) is deleted, wherein the sensor (4) is a laser scanner (5), and **characterized in that** sensor data relating to obstacles in the environment of the industrial truck (1) are captured from the map (10) by means of a virtual sensor (13) positioned in the map (10) and are passed to a vehicle controller.

2. Method according to Claim 1,
**characterized**
**in that** the map (10) is a grid map (12).

3. Method according to Claim 1 or 2,
**characterized**
**in that** the map (10) is a fixed global map.

4. Method according to Claim 1 or 2,
**characterized**
**in that** the map (10) is a map relatively based on the industrial truck (1).

5. Method according to one of Claims 1 to 4,
**characterized**
**in that** the virtual sensor (13) is arranged at the position of the industrial truck (1) in the map (10) .

## Revendications

1. Procédé destiné à la détection d'obstacles (3) dans l'environnement d'un chariot de manutention (1), en particulier d'un chariot de manutention (1) destiné à la préparation de commandes, dans lequel le chariot de manutention (1) présente, pour la surveillance de l'environnement, un capteur (4) qui est relié à un dispositif de commande et détecte une zone de surveillance (9) en évaluant les données du capteur (4),
dans lequel des objets (7, 8) détectés dans les données dans l'environnement du chariot de manutention (1) sont inscrits sur une carte (10) et la zone de surveillance (6) est à nouveau détectée en continu, **caractérisé en ce qu'**une pondération est augmentée pour les objets (7) à la même position absolue sur la carte, et **en ce que** pour les objets manquants (8) à la même position, la pondération d'un objet (8) inscrit est réduite jusqu'à une suppression de l'objet (8), dans lequel le capteur (4) est un scanner laser (5), et **caractérisé en ce qu'**un capteur virtuel (13) qui est positionné sur la carte (10) détecte des données de capteur concernant des obstacles dans l'environnement du chariot de manutention (1) à partir de la carte (10) et les transmet à une commande de véhicule.

2. Procédé selon la revendication 1,
**caractérisé en ce que**
la carte (10) est une carte quadrillée (12).

3. Procédé selon la revendication 1 ou 2,
**caractérisé en ce que**
la carte (10) est une carte globale fixe.

4. Procédé selon la revendication 1 ou 2,
**caractérisé en ce que**
la carte (10) est une carte relative au chariot de manutention (1).

5. Procédé selon l'une quelconque des revendications 1 à 4,
**caractérisé en ce que**
capteur virtuel (13) est disposé à la position du chariot de manutention (1) sur la carte (10).
